# EUROPÄISCHE PATENTSCHRIFT

(11) **EP 0 571 744 B1**
(45) Veröffentlichungstag und Bekanntmachung des Hinweises auf die Patenterteilung: **15.01.1997**
(21) Anmeldenummer: 93105541.2
(22) Anmeldetag: 03.04.1993
(51) Int. Cl.: C02F 9/00, C02F 1/22

(54) **Verfahren und Anordnung zur Aufbereitung von Abwassern, insbesondere in Flugzeugen**
Process and apparatus for the treatment of waste water, especially for aircraft
Procédé et dispositif pour le traitement des eaux usées, en particulier dans les avions

(30) Priorität: 21.05.1992 DE 4216742; 28.01.1993 DE 4302319
(43) Veröffentlichungstag der Anmeldung: 01.12.1993
(73) Patentinhaber: Daimler-Benz Aerospace Airbus Gesellschaft mit beschränkter Haftung, 21129 Hamburg (DE)
(72) Erfinder: Müller, Mario Dr., W-2057 Reinbek (DE); Sekoulov, Ivan, Prof., W-2000 Hamburg 52 (DE)
(74) Vertreter: Hansmann, Dierk, Dipl.-Ing.

(56) Entgegenhaltungen:
- US-A- 4 572 785
- US-A- 4 592 768
- SOVIET PATENTS ABSTRACTS, Chemische Sektion, Woche 9051, D 15, 13. Feber 1991, DERWENT PUBLICATIONS LTD., London Seite 4

## Beschreibung

Die Erfindung betrifft ein Verfahren und eine Anordnung zur Aufbereitung von Abwassern, insbesondere in Flugzeugen.

Im Flugzeug ist es im Zuge der ständigen Suche nach Verbesserung des Komforts der Fluggäste einerseits und der begrenzten Ladekapazität von Flugzeugen andererseits ein Erfordernis, mit einer begrenzten Menge an Trink- und Erauchwasser während des Fluges auszukommen. So sind bei immer steigenden Komfortbedürfnissen, beispielsweise Duschen und Waschen während des Fluges bei Langstreckenflügen, die vorhandenen Wassermengen optimal zu nutzen. Bei Kurzstreckenflügen zur Nutzung des Flugzeuges als Massentransportmittel erfordert ein mögliches Maximum an Beladung (Fluggäste oder Fracht) eine Reduzierung der mitgeführten Wassermengen bis zu einem Minimum.

Mit dem bekannten Stand der Technik sind Lösungen bekannt, die zumindest teilweise benutztes Wasser zur Wiederverwendung aufbereiten. In der US-Zeitschrift "Transactions of the ASME", Journal of Engineering for Industry, Volume 97, No. 1, Februar 1975, Seiten 224 - 227; A.L. Ingelfinger et al.: "Integratet water and waste managenemt system for future spacecraft" wird eine Lösung für die Raumfahrt vorgeschlagen, die das Problem der Abwasseraufbereitung mittels einem Verfahren, welches im wesentlichen auf der Verdampfung und katalytischen Oxidation der Wasserbestandteile mit Hilfe von Hitze löst, die durch die Verwendung von Radioisotopen gewonnen wird.

Dieser Lösung haftet der Nachteil an, daß sie aus Sicherheitsgründen aufgrund der auftretenden Strahlung in einem Passagierflugzeug nicht vertretbar ist und der benötigte hohe Energiebedarf dieser Einrichtung zur Abwasseraufbereitung mit einer anderen Energieform als mit der vorgeschlagenen Atomenergie nicht erreicht wird. Eine weitere bekannte Lösung, die DE-PS 37 15 759, sieht in einer Anordnung zur Wasserversorgung an Bord eines Flugzeuges eine Einrichtung zur Aufbereitung von Abwassern vor, mit der zur Reinigung des Abwassers bis zum Erreichen von Trinkwasserqualität folgende Einheiten durchlaufen werden: ein mechanischer Filter, eine Pumpe, ein Kohlefilter bekannter Art mit eingelagerter Aktivkohle, eine Ozon-Stufe, eine Umkehrosmosestufe und eine Desinfektionsstufe. Dieser Einrichtung haftet der Nachteil an, daß für eine hohe Reinigungswirkung in der Ozon-Stufe sehr lange Kontaktzeiten des zu behandelnden Abwassers mit dem Ozon eingehalten werden müssen und ein großer Raumbedarf infolge eines großen Behandlungsvolumens des Abwassers bei Einhaltung der geforderten Durchsatzleistungen notwendig ist.

Aus US-A-4592768 ist eine Anordnung und ein Verfahren zur Entsalzung von Seewasser bekannt. Diese Lösung ist zur Herstellung von Trinkwasser aus Salzwasser mit einer vorbestimmbaren Zusammensetzung geeignet. Dabei werden unter anderem eine Gefrierkonzentrationsstufe, eine Vorbehandlungsstufe und eine Umkehrosmosestufe angewendet. Aus SU-A-1542920 ist eine Verfahren zur Herstellung von Reinstwasser aus Leitungswasser bekannt, welches insbesondere für die Radio-, Electronic- und Lebensmittelindustrie und auch in der Medizin Anwendung finden kann. Dabei werden die Stufen: Ultrafiltration, Aktivkohlefilter, Umkehrosmose, Gefrierkonzentration und Ionisation durchlaufen. Diese, für spezielle Anwendungen mit vergleichsweise gering verschmutztem Wasser vorgesehenen Lösungen zeigen üblicherweise bekannte Reinigungsstufen für die Wasseraufbereitung. Für die Anwendung bei stark verschmutztem, beliebig zusammengesetztem und in der Zusammensetzung nicht vorbestinimbarem Abwasser sind die in der im Stand der Technik angegebenen Reihenfolge arbeitenden Reinigungsstufen aber nicht geeignet. Für die Reinigung von derartig verschmutztem Abwasser, insbesondere in Flugzeugen, gibt der bekannte Stand der Technik keine Anregung.

Demgemäß liegt der Erfindung die Aufgabe zugrunde, ein gattungsgemäßes Verfahren derart durchzuführen, daß eine Wasseraufbereitung sicherheitstechnisch unbedenklich, gewichts- und raumsparend und mit minimierter Energiezufuhr erfolgt und die Qualität des aufbereiteten Wassers den entsprechenden Vorschriften von Trink- bzw. Brauchwasser entspricht.

Diese Aufgabe ist bei einem gattungsgemäßen Verfahren mit den im Anspruch 1 angegebenen Verfahrensschritten gelöst. Dabei durchläuft das Abwasser die folgenden Einheiten in angegebener Reihenfolge wenigstens einmal: eine mechanische Filterstufe, als wesentliche Hauptreinigung zumindest eine Gefrierkonzentrationsstufe, eine Membrantrennstufe, eine Aktivkohlefilterstufe und eine Desinfektionsstufe.

Insbesondere vorteilhaft ist, daß die Gefrierkonzentrationsstufe als eine universelle Reinigungsstufe die Möglichkeit bietet, beliebig zusammengesetztes Abwasser in einer Verfahrensanordnung mit weiteren, üblicherweise bekannten Reinigungsstufen bis zur Trinkwasserqualität aufzubereiten, wobei partikuläre und gelöste Stoffe aus der Schmutzfracht abgetrennt werden. Für die nach der Gefrierkonzentrationsstufe folgende Membrantrennstufe wird ein starkes Absinken der Reinigungsleistung vermieden. Membranschädigende Substanzen, wie Säuren, freies Chlor und Sauerstoff, gelangen nicht bis zur Membrantrennstufe, die Standzeiten werden verlängert und die Funktionstüchtigkeit bleibt erhalten.

Vorteilhaft ist weiterhin, daß die Gefrierkonzentrationsstufe sicherheitstechnisch völlig unbedenklich arbeitet.

Eine Wasseraufbereitungsanordnung zur Durchführung des Verfahrens gemäß Anspruch 1 ist im Anspruch 4 angegeben.

Weiterbildungen und zweckmäßige Ausgestaltungen ergeben sich aus den Ansprüchen 2, 3, 5-14.

Im Anspruch 2 ist ein Verfahrensschritt angegeben, der nach der Gefrierkonzentrationsstufe ein Verschieben des pH-Wertes der Lösung in einen neutralen Bereich ermöglicht.

Mit der Maßnahme gemäß Anspruch 3 ist eine Trinkwasserqualität der Lösung erreichbar, die die für Trinkwasser vorgeschriebenen Mineralien enthält.

Anspruch 5 zeigt Möglichkeiten der Ausbildung der mechanischen Filterstufe, um grobe und kleinere Partikel mit einer Größe von nahezu 15 µm auszufiltern.

Anspruch 6 zeigt Möglichkeiten der Ausgestaltung einer Membrantrennstufe.

Die Maßnahmen gemäß Anspruch 7, 8 oder 9 ermöglichen, daß eine Gefrierkonzentration mit einem geringen technischen Aufwand und geringem Raumbedarf bei guten Reinigungsleistungen und ausreichenden Durchsatzleistungen durchführbar ist.

Die Ausgestaltung nach Anspruch 10 zeigt eine Gefrierkonzentrationsstufe mit guten Reinigungsleistungen und einem kontinuierlichen Betrieb.

Die Ausgestaltung nach Anspruch 11 zeigt eine Gefrierkonzentrationsstufe mit einer sehr hohen Kristallreinheit und damit einer hohen Reinigungsleistung infolge kleiner Kristallwachstumsgeschwindigkeiten im Kristallsuspensionsreaktor.

Aus Anspruch 12 ist insbesondere vorteilhaft, daß für die Gefrierkonzentrationsstufe in der Verfahrensdurchführung für das Auffrieren der Kristallschicht unter Ausnutzung der natürlich vorhandenen Kälte in Flughöhe nur ein sehr geringer Energiebedarf notwendig ist.

In den Ansprüchen 13 und 14 sind Möglichkeiten zur Erzeugung von Abschmelzenergie aufgeführt. Mit dem Anspruch 13 ist insbesondere vorteilhaft, daß für die Gefrierkonzentrationsstufe in der Verfahrensdurchführung für das Abschmelzen der Eisschicht im Flugzeug schon vorhandene Wärme genutzt wird und somit der Energiebedarf wesentlich reduziert wird.

Die Erfindung wird nachstehend beschrieben und anhand der Figuren 1 - 9 näher erläutert.
Es zeigen:
- Fig. 1: eine erste Ausgestaltungsform einer Abwasseraufbereitungsanordnung,
- Fig. 2: eine Tabelle der erzielten Parameter der ersten Ausgestaltungsform,
- Fig. 3: eine zweite Ausgestaltungsform einer Abwasseraufbereitungsanordnung,
- Fig. 4: eine Tabelle der erzielten Parameter der zweiten Ausgestaltungsform,
- Fig. 5: eine dritte Ausgestaltungsform einer Abwasseraufbereitungsanordnung,
- Fig. 6: eine Tabelle der erzielten Parameter der dritten Ausgestaltungsform,
- Fig. 7: eine vierte Ausgestaltungsform einer Abwasseraufbereitungsanordnung,
- Fig. 8: eine Tabelle der erzielten Parameter der vierten Ausgestaltungsform und
- Fig. 9: eine schematische Darstellung einer Gefrierkonzentrationsstufe in Form eines Rieselfilmreaktors.

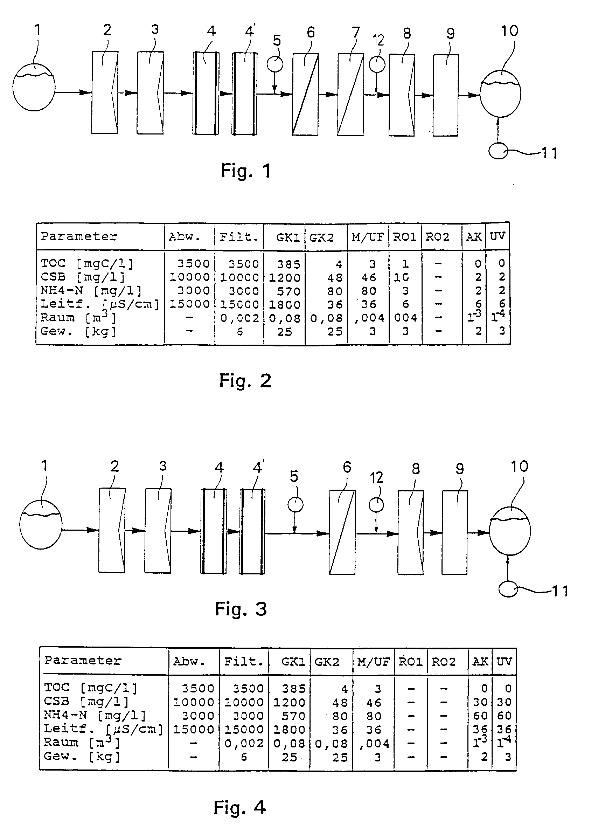

In den Fign. 1 bis 8 sind Reinigungsstufen zur Aufbereitung von Abwasser in verschiedenen Kombinationen und die damit erzielten Parameter gezeigt, wobei eine Gefrierkonzentrationstufe als Hauptreinigungsstufe die zentrale Rolle spielt. Das Verfahren der Gefrierkonzentration ist ein in der Grundstoff- und Lebensmittelindustrie an sich bekanntes Verfahren und wird zur Aufkonzentration von Lösungen, beispielsweise zur Gewinnung von Geschmacksstoffen, angewendet. Als ein universelles Reinigungsverfahren bietet das Gefrierkonzentrationsverfahren die Möglichkeit, beliebig zusammengesetztes Abwasser in einer Verfahrensanordnung mit weiteren, üblicherweise bekannten Reinigungsstufen bis zur Trinkwasserqualität aufzubereiten, wobei partikuläre und gelöste Stoffe aus der Schmutzfracht abgetrennt werden. Es wird ein thermisches Trennverfahren realisiert, welches auf einer Phasenumwandlung flüssig/fest beruht. Durch Abkühlung wird das Abwasser, im folgenden Lösung genannt, in einen übersättigten Zustand versetzt. Das führt zu einer Phasenumwandlung, bei der Eiskristalle ausfrieren. In den Eiskristallen können nahezu keine Verunreinigungen verbleiben, da die Fremdmoleküle aufgrund ihrer Größe und ihrer Form nicht zur Mischkristallbildung im Eiskristall geeignet sind. So werden praktisch unspezifisch alle im Wasser gelösten und partikularen Stoffe mit der fortschreitenden Eisfront ausgeschieden. Allenfalls in sehr niedrigen Konzentrationen, als Punktdefekte im Kristallgitter, können beispielsweise Ammoniak (NH₃), Ammoniumfluorid (NH₄) oder Fluorwasserstoff (HF) eingeschlossen sein.

Im folgenden werden vier Ausführungsformen einer Wasseraufbereitungsanordnung in einer schematischen Darstellung gezeigt. Die Anzahl und Kombination der Reinigungsstufen, wie eine mechanische Filterstufe, eine Gefrierkonzentrationsstufe, eine Mikrofiltrations-und Ultrafiltrationsstufe, eine Umkehrosmosestufe, eine Aktivkohlefilterstufe und eine UV-Bestrahlungsstufe, bestimmen die erreichbare Qualität des aufbereiteten Wassers. Zum Bewegen des Wassers in den Filtrationsstufen und der Umkehrosmosestufe sind vorzugsweise Pumpen eingesetzt, die aber in den Fign. nicht dargestellt sind. Zur Feststellung der Wirksamkeit der jeweiligen Reinigungsstufen sind Leistungsdaten, wie die Salzkonzentration durch die ionische Leitfähigkeit (Leitf. in µS/cm), die Anreicherung von organischen Inhaltsstoffen durch die Summenparameter TOC (total organic carbon - der gesamte Kohlenstoffgehalt in mgC/l) und CSB (chemischer Sauerstoffbedarf in mg/l), sowie der Ammoniumgehalt NH₄-N, bestimmt und dargestellt. Angegeben sind weiterhin der notwendige Raumbedarf (Raum in m³) und das Gewicht (Gew. in kg) der einzelnen Reinigungsstufen. Diese Leistungsdaten sind in Tabellenform im Zusammenhang mit der jeweiligen Ausführungsform in die Fign. 1 - 8 aufgenommen.
Zur Erläuterung des Tabellenkopfes bedeuten folgende Abkürzungen:
- Abw. -: Abwasser
- Filt. -: mechanische Filterstufe
- GK1 -: erste Gefrierkonzentrationsstufe
- GK2 -: zweite Gefrierkonzentrationsstufe
- M/UF -: Mikrofiltrationsstufe bzw. Ultrafiltrationsstufe
- RO1 -: erste Umkehrosmosestufe
- RO2 -: zweite Umkehrosmosestufe
- AK -: Aktivkohlefilterstufe
- UV -: UV-Bestrahlungsstufe

Die Wirkungen der einzelnen Reinigungsstufen sind in der Wasseraufbereitung an sich bekannt, sollen hier jedoch kurz erläutert werden.

Die mechanische Filterstufe dient im wesentlichen zur Abtrennung partikularer Stoffe aus der Lösung. Siebfilter dienen zur Abtrennung grober Artikel und mit einem Spaltfilter können Partikel in einer Größenordnung von 15 bis 20 µm herausgefiltert werden. Sie ist Bestandteil aller Ausgestaltungsformen der Wasseraufbereitungsanordnung.

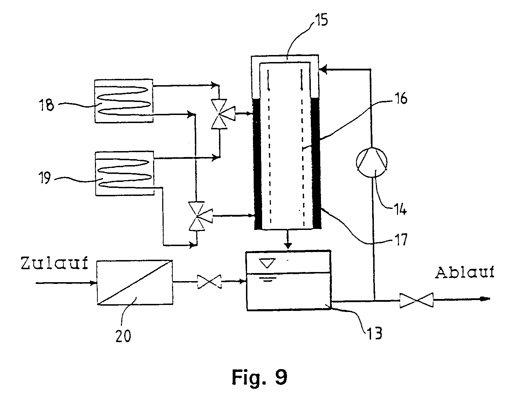

In der Gefrierkonzentrationsstufe werden partikulare und gelöste Stoffe ausgeschieden. Die mögliche Reinigungsleistung hängt im wesentlichen von der Kristallwachstumsgeschwindigkeit der Eiskristalle ab. Eine mögliche technische Ausgestaltungsform dieser Gefrierkonzentrationstufe ist in der Figur 9 gezeigt und wird in der Erläuterung dieser Figur beschrieben.

Die Mikrofiltrationsstufe kann partikuläre Stoffe bis zu einem Mikrometer ausfiltern, ist aber ungeeignet für den Rückhalt gelöster Stoffe.

Die Ultrafiltrationsstufe kann Keime und gelöste Stoffe zurückhalten. Sie entspricht in ihrem Trennprinzip dem der Mikrofiltration, besitzt aber eine niedrigere Trenngrenze. Die Mikro- und Ultrafiltrationsstufen sind unverzichtbare Verfahrensstufen, um partikuläre Reststoffe von der Umkehrosmosestufe und der Aktivkohlefilterstufe zurückzuhalten.

In der Umkehrosmosestufe kommt ein sehr reines Wasser lieferndes Membrantrennverfahren zur Anwendung, in der die Lösung mit einer halbdurchlässigen Membran in Kontakt gebracht wird und sie mit Druck, der größer als der osmotische Druck ist, durch die Membran gedrückt wird. Die Membran ist undurchlässig für Bakterien und verschiedene organische Stoffe und kann einen hohen Reinigungsgrad erzielen, der aber von der Konzentration der Schadstoffe und vom Lösungsmittel sehr empfindlich abhängt. Hohe Schadstoffkonzentrationen bedeuten einen hohen osmotischen Druck und es besteht die Gefahr einer Konzentrationspolarisation vor der Membran. Weitere, die Membran schädigende Stoffe, wie Säuren, freies Chlor und Sauerstoff, organische Lösungsmittel, Bakterien und allgemeine Ablagerungen dürfen nur in geringen Konzentrationen auf die Membran treffen. Diese niedrige Verunreinigungskonzentration ist in den vor der Umkehrosmosestufe zu durchlaufenden Reinigungsstufen zu realisieren, wenn ein ausreichendes Rückhaltevermögen für die in den entsprechenden Verordnungen genannten chemischen Stoffe erreicht werden soll.

In der Aktivkohlefilterstufe werden gelöste organische Stoffe auf Aktivkohle adsorbiert. Als Nachreinigung des Ablaufs aus der Gefrierkonzentrationsstufe bzw. Umkehrosmosestufe mit nur noch einer geringen Schadstoffbelastung für die nachfolgende Stufe wird eine hohe Reinigungsleistung erreicht.

In der UV-Bestrahlungsstufe wird die aufbereitete Lösung desinfuziert und in einfacher Weise durch UV-Licht in hygienisch befriedigender Qualität gereinigt. Die meist vorkommenden Mikroorganismen werden bei einer kurzen Kontaktzeit mit UV-Licht abgetötet.
Die technisch einfach gestaltete Aktivkohlefilterstufe und die UV-Bestrahlungsstufe als Sicherheitsstufe sind Bestandteil aller Ausgestaltungsformen der Wasseraufbereitungsanordnung.

In Fig. 1 ist eine erste Ausgestaltungsform der Wasseraufbereitungsanordnung und in Fig. 2 die damit erreichten Leistungsdaten dargestellt. Aus einem Abwassertank 1 wird die aufzubereitende Lösung entnommen und durchläuft dabei nacheinander folgende Einheiten : die mechanische Filterstufe mit einem Siebfilter 2 und einem Spaltfilter 3, eine erste Gefrierkonzentrationstufe 4 und eine zweite Gefrierkonzentrationsstufe 4', eine Mikro-und Ultrafiltrationsstufe 6, eine Umkehrosmosestufe 7, eine Aktivkohlefilterstufe 8 und eine UV-Bestrahlungsstufe 9. Nach den Gefrierkonzentrationsstufen 4 und 4' erfolgt ein Ansäuern 5 der Lösung, um den pH-Wert in einen neutralen Bereich zu verschieben. Die aufbereitete und im Wassertank 10 gesammelte Lösung ist mineralstofffrei und wird über eine Mineralienzugabe 11 mit für Trinkwasser vorgeschriebenen Mineralien angereichert. Zum Bewegen der Lösung in den Filtrationsstufen und der Umkehrosmosestufe sind vorzugsweise Pumpen notwendig, die aber nicht in der Fig. 1 dargestellt sind. Außerdem erfolgt eine Störfallerkennung 12 in Form einer Messung der Leitfähigkeit der aufbereiteten Lösung, um den Zustand der gereinigten Lösung zu kontrollieren.
Entscheidend in dieser Anordnung ist die zentrale Rolle der Gefrierkonzentrationsstufen 4 und 4'. Für den Zulauf zur Gefrierkonzentrationsstufe 4 ist eine mechanische Filtration mit dem Siebfilter 2 und mit dem Spaltfilter 3 ausreichend. Kleinere Partikel mit einer Größe von 15 - 20 µm werden zurückgehalten. Der zweistufigen Gefrierkonzentrationsstufe 4 und 4' als Hauptreinigungsstufen sind Mikro-und Ultrafiltrationsstufe 6 nachgeschaltet. Damit werden feste und kolloidale Restbestandteile von den nachfolgenden Reinigungsstufen ferngehalten. Die Umkehrosmosestufe 7 ist als Sicherheitsstufe der Hauptreinigungsstufe nachgeschaltet. Aufgrund der Behandlung der Lösung in der Hauptreinigungsstufe 4 und 4' und der Mikro-und Ultrafiltrationsstufe 6 wird ein wesentliches Absinken der Reinigungsleistung der Umkehrosmosestufe 7 vermieden. Wie aus den Leistungsdaten der Tabelle in Fig. 2 zu entnehmen ist, wird mit der Kombination von zweistufigen Gefrierkonzentrationsstufe 4 und 4' und der einstufigen Umkehrosmosestufe 7 nach der UV-Bestrahlungsstufe 9 eine weitestgehende Trinkwasserqualität des aufbereiteten Wassers erreicht.

In Fig. 3 ist eine zweite Ausgestaltungsform einer Wasseraufbereitungsanordnung mit einer anderen Kombination der Reinigungsstufen ersichtlich.
Aus dem Abwassertank 1 wird die Lösung entnommen, beispielsweise mittels hier nicht dargestellter Pumpen transportiert und durchläuft dabei nacheinander folgende Einheiten : die mechanische Filterstufe mit dem Siebfilter 2 und dem Spaltfilter 3, die erste Gefrierkonzentrationstufe 4 und die zweite Gefrierkonzentrationsstufe 4', die Mikro- und Ultrafiltrationsstufe 6, die Aktivkohlefilterstufe 8 und die UV-Bestrahlungsstufe 9. Nach den Gefrierkonzentrationsstufen 4 und 4' erfolgt ein Ansäuern 5 der Lösung. Die aufbereitete und im Wassertank 10 gesammelte Lösung ist mineralstofffrei und wird über eine Mineralienzugabe 11 mit Mineralien angereichert. Außerdem erfolgt eine Störfallerkennung 12 in Form der Leitfähigkeitsmessung des aufbereiteten Wassers.
In dieser Anordnung fehlt die Umkehrosmosestufe 7 als Sicherheitsstufe, die der Gefrierkonzentrationsstufe 4 bzw. 4' nachgeschaltet wäre. Aus Fig. 4 sind Parameter zu entnehmen, die zeigen, daß trotz Fehlen der Umkehrosmosestufe 7 nach der UV-Bestrahlungsstufe 9 nahezu Trinkwasserqualität der aufbereiteten Lösung und somit gutes Brauchwasser erreicht wird.

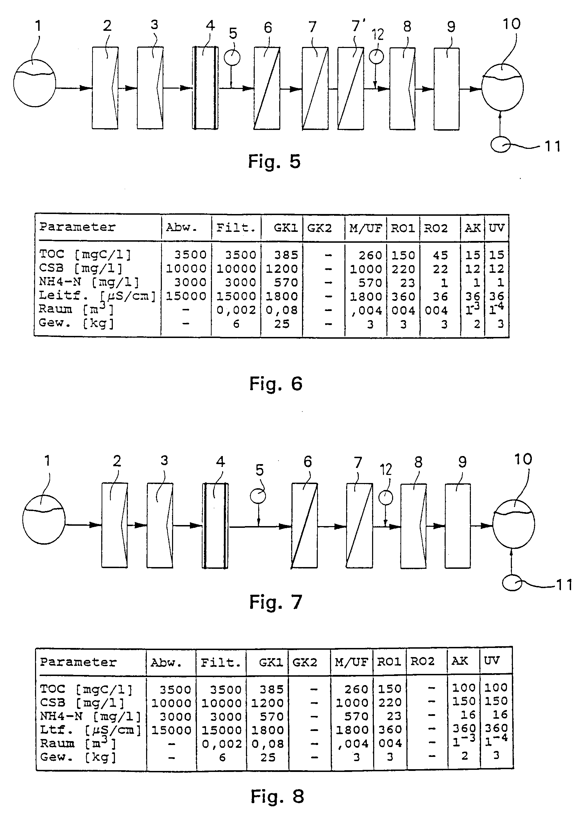

In Fig. 5 ist eine dritte Ausgestaltungsform einer Wasseraufbereitungsanordnung mit einer weiteren Kombination der Reinigungsstufen ersichtlich.
Aus dem Abwassertank 1 wird die Lösung entnommen, beispielsweise mittels hier nicht dargestellter Pumpen bewegt und durchläuft dabei nacheinander folgende Einheiten : die mechanische Filterstufe mit dem Siebfilter 2 und dem Spaltfilter 3, die Gefrierkonzentrationstufe 4, die Mikro-und Ultrafiltrationsstufe 6, eine erste Umkehrosmosestufe 7 und eine zweite Umkehrosmosestufe 7', die Aktivkohlefilterstufe 8 und die UV-Bestrahlungsstufe 9. Nach der Gefrierkonzentrationsstufe 4 erfolgt ein Ansäuern 5 der Lösung.

Die aufbereitete und im Wassertank 10 gesammelte Lösung ist mineralstofffrei und wird über eine Mineralienzugabe 11 mit Mineralien angereichert. Außerdem erfolgt eine Störfallerkennung 12 in Form einer Leitfähigkeitsmessung der aufbereiteten Lösung. In dieser dritten Ausgestaltungsform ist als Kombination eine einstufige Gefrierkonzentrationsstufe und eine zweistufige Umkehrosmosestufe realisiert.
Aus der Tabelle in Fig. 6 ist zu entnehmen, daß im wesentlichen gutes Brauchwasser mit nahezu Trinkwasserqualität erhalten wurde, welches vorzugsweise für Spül-und Waschzwecke einsetzbar ist, wie aus den Leistungsdaten nach der UV-Bestrahlungsstufe 9 hervorgeht. Weiterhin ist am Parameter Gewicht zu erkennen, daß mit einer Gefrierkonzentrationsstufe und zweier Umkehrosmosestufen das Gesamtgewicht und das Raumvolumen dieser Ausgestaltungsform einer Wasseraufbereitungsanordnung minimiert ist.

In Fig. 7 ist eine vierte Ausgestaltungsform einer Wasseraufbereitungsanordnung dargestellt.
Aus dem Abwassertank 1 wird die Lösung entnommen, beispielsweise mittels hier nicht dargestellter Pumpen transportiert und durchläuft dabei nacheinander folgende Einheiten : die mechanische Filterstufe mit dem Siebfilter 2 und dem Spaltfilter 3, die Gefrierkonzentrationstufe 4, die Mikro- und Ultrafiltrationsstufe 6, die Umkehrosmosestufe 7, die Aktivkohlefilterstufe 8 und die UV-Bestrahlungsstufe 9. Nach der Gefrierkonzentrationsstufe 4 erfolgt ein Ansäuern 5 der Lösung. Die aufbereitete und im Wassertank 10 gesammelte Lösung ist mineralstofffrei und wird über eine Mineralienzugabe 11 mit Mineralien angereichert. Außerdem erfolgt eine Störfallerkennung 12 in Form einer Leitfähigkeitsmessung der aufbereiteten Lösung.
In dieser vierten Ausgestaltungsform ist als Kombination eine einstufige Gefrierkonzentrationsstufe und eine einstufige Umkehrosmosestufe realisiert. Aus den Leistungdaten nach der UV-Bestrahlungsstufe 9, ersichtlich in der Tabelle in Fig. 8, ist zu entnehmen, daß im wesentlichen gutes Brauchwasser als aufbereitetes Wasser entstanden ist, welches beispielsweise für die Nutzung in Toilettenspülungen einsetzbar ist.

Eine schematische Darstellung einer technischen Realisierungsmöglichkeit der Gefrierkonzentrationsstufe in Form eines Rieselfilmreaktors ist in Fig. 9 dargestellt. Der Rieselfilmreaktor ist ein Kristallschichtreaktor, bei dem zusammenhängende Kristallschichten erzeugt werden. Er ist einfach konstruiert, ohne bewegliche Teile und kommt ohne aufwendige Trennsäulen aus.
In einen Wasserbehälter 13 wird aus einem Zulauf mit der mechanischen Filterstufe 20, bestehend aus Siebfilter 2 und Spaltfilter 3, vorgereinigte Lösung geleitet. In einem senkrecht stehenden Doppelwandbehälter 15 wird mittels einer Pumpe 14 über einen entsprechend gestalteten Überlauf am oberen Ende die vorgereinigte Lösung gebracht. An der mit Kühlaggregaten 18, 19 gekühlten Wand 17 wächst eine Kristallschicht 16 unter dem herabfallenden Rieselfilm. Das Auffrieren der Kristallschicht 16 erfolgt unter Ausnutzung der in Reiseflughöhe vorhandenen Kälte mittels der als Außenhaut-Wärmetauscher ausgebildeten Kühlaggregaten 18, 19. Das gereinigte Wasser liegt in Form der aufgefrorenen Kristallschicht 16 vor, in dem Wasserbehälter 13 werden die überschüssige Lösung und ausgeschiedene Verunreinigungen gesammelt und mehrmals in den Umlauf gebracht. Dabei tritt eine Aufkonzentration der Lösung ein, die gleichzeitig ein Absinken der Reinigungsleistung verursacht. Die Wasseraufbereitung mit einem Rieselfilmreaktor ist in einem diskontinuierlichen Betrieb realisierbar, d.h. nach einem genügendem Aufwachsen der Kristallschicht 16 wird eine Abschmelzphase eingeleitet. Die dafür benötigte Abschmelzenergie kann mit an sich bekannten Heizaggregaten und Methoden zur Wärmeerzeugung in Flugzeugen, beispielsweise die Nutzung von Zapfluft von den Triebwerken oder Nutzung von elektrischer Energie, bereit gestellt werden. In einer bevorzugten Lösung nutzt man durch einen Mehrkammeraufbau des Doppelmantelbehälters 15 die beim Aufwachsen der Kristallschicht 16 entstehende Kristallisationswärme an einer anderen Wand zum Abschmelzen einer weiteren Eiskristallschicht und die benötigte Abschmelzenergie kann erheblich reduziert werden.
Das von der Kristallschicht abgeschmolzene Wasser wird in einem Ablaufbehälter aufgefangen. Dieser Ablaufbehälter kann der Wasserbehälter 13 selbst sein, wenn nach Ablassen des aufkonzentrierten Abwassers und einer Reinigung der Wasserbehälter 13 keine Verunreinigungen mehr enthält. Eine andere Ausgestaltungsform ist, daß dieser Ablaufbehälter in der Abschmelzphase an Stelle des Wasserbehälters 13 angeordnet ist. Der Wasserbehälter 13 kann auch als ein Behälter für das aufzubereitende Abwasser und ein Behälter für das gereinigte, abgeschmolzene Wasser ausgebildet sein.
Reinigungsleistungen bei partikularen Stoffen um 95% und entsprechend der Konzentration der Lösung bei der Leitfähigkeit, NH₄-N, TOC und CSB von > 91 % sind mit dem Rieselfilmreaktor erreichbar.
Eine weitere technische Realisierungsform eines Kristallschichtreaktors im diskontinuierlichen Betrieb ist ein Rührwerkskristallisator. In einem Doppelmantelbehälter wird mit einem Rührer eine intensive Bewegung der Lösung erreicht und an den gekühlten Wänden des Innenzylinders gefriert Eis aus der Lösung auf.
Eine kontinuierliche Kristallschichtbildung mit einer weiteren Realisierungsform eines Kristallschichtreaktors ist mit einer Kristallisationswalze erreichbar. Eine kontinuierlich rotierende, gekühlte Walze taucht in die in einem Wasserbehälter aufgefangene Lösung ein. Die sich dabei auf der Walze bildende Eisschicht wird laufend abgeschabt und in einem weiteren Wasserbehälter aufgefangen als gereinigte Lösung.
Bei einer weiteren technischen Realisierungsform, die eine sehr hohe Reinigungsleistung erreicht, werden mit einem Kristallsuspensionsreaktor Fristallkörner in einer Lösung erzeugt. Kristallsuspensionsreaktoren stellen große Kristalloberflächen zur Verfügung, so daß die Kristallwachstumsgeschwindigkeiten sehr klein gehalten werden können und somit Verunreinigungen nicht mit in die Kristalle eingebaut werden. Die gebildeten Kristallkörner werden in einem zweiten Verfahrensschritt mit Trennsäulen abgetrennt. Ein kontinuierlicher Betrieb ist mit dieser technischen Anlage möglich.

## Patentansprüche

1. Verfahren zur Aufbereitung von Abwassern, insbesondere in Flugzeugen, in der das Abwasser die folgenden Einheiten in angegebener Reihenfolge wenigstens einmal durchläuft: eine mechanische Filterstufe (20; 2, 3), als wesentliche Hauptreinigung zumindest eine Gefrierkonzentrationsstufe (4, 4'), eine Membrantrennstufe (6, 7, 7') eine Aktivkohlefilterstufe (8) und eine Desinfektionsstufe (9).

2. Verfahren nach Anspruch 1,
**dadurch gekennzeichnet, daß**
nach der Gefrierkonzentrationsstufe (4, 4') Ansäuerungsmittel (5) der Lösung zugeführt werden.

3. Verfahren nach Anspruch 1 oder 2,
**dadurch gekennzeichnet, daß**
nach der letzten Reinigungsstufe Mineralien (11) zugegeben werden.

4. Wasseraufbereitungsanordnung zur Durchführung des Verfahrens zur Abwasseraufbereitung, insbesondere in einem Flugzeug, wobei die Anordnung einen Abwassertank (1), eine mechanische Filterstufe (20, 2, 3), als wesentliche Hauptreinigungsstufe zumindest eine Gefrierkonzentrationsstufe (4, 4'), eine Membrantrennstufe (6, 7, 7'), eine Aktivkohlefilterstufe (8), eine Desinfektionsstufe (9) und einen Wassertank (10) aufweist, die in der angegebenen Reihenfolge miteinander verbunden sind und eine Pumpe zum Transport des (Ab)wassers vorgesehen ist.

5. Anordnung nach Anspruch 4,
**dadurch gekennzeichnet, daß**
die mechanische Filterstufe (20) im wesentlichen gebildet ist aus zumindest einem Siebfilter (2) und/oder zumindest einem Spaltfilter (3).

6. Anordnung nach einem der Ansprüche 4 oder 5,
**dadurch gekennzeichnet, daß**
die Membrantrennstufe im wesentlichen gebildet ist aus mindestens einem Ultrafilter (6) und/oder mindestens einer Umkehrosmosestufe (7, 7').

7. Anordnung nach einem der Ansprüche 4, 5 oder 6,
**dadurch gekennzeichnet, daß**
als Gefrierkonzentrationsstufe (4, 4') im wesentlichen ein als Rieselfilmreaktor ausgebildeter Kristallschichtreaktor vorgesehen ist, der mit einem Wasserbehälter (13) über eine Pumpe (14) verbunden ist und an Kühl- und Heizaggregaten (18, 19) angeschlossen ist, wobei der Rieselfilmreaktor mit Abwasser gespeist wird das Wasser in einem Kreislauf geführt wird, bis eine genügend dicke Kristallschicht an einer gekühlten Wand (17) aufgewachsen ist, die dann abgeschmolzen wird und das abgeschmolzene Wasser im gleichen Wasserbehälter (13) oder einem weiteren Wasserbehälter aufgefangen wird.

8. Anordnung nach Anspruch 7,
**dadurch gekennzeichnet, daß**
der Rieselfilmreaktor als Doppelwandbehälter (15) ausgebildet ist.

9. Anordnung nach Anspruch 7,
**dadurch gekennzeichnet, daß**
der Rieselfilmreaktor als Doppelwandbehälter (15) und gleichzeitig als Mehrkammerbehälter ausgebildet ist, wobei die beim Aufwachsen der Kristallschicht an der gekühlten Wand (17) entstehende Kristallisationswärme an einer weiteren Wand zum Abschmelzen einer weiteren Kristallschicht genutzt wird.

10. Anordnung nach einem der Ansprüche 4, 5 oder 6,
**dadurch gekennzeichnet, daß**
als Gefrierkonzentrationsstufe (4, 4') im wesentlichen ein als Kristallisationswalze ausgebildeter Kristallschichtreaktor vorgesehen ist, deren mittels Kühlaggregaten gekühlte Walze in einen das Abwasser auffangenden Wasserbehälter eintaucht und die sich kontinuierlich bildende Eiskristallschicht mittels Schabeinrichtungen abgeschabt wird und das abgeschabte Eis, welches mit Hilfe von Heizaggregaten aufgetaut wird, in einem weiteren Wasserbehälter aufgefangen wird.

11. Anordnung nach einem der Ansprüche 4, 5 oder 6,
**dadurch gekennzeichnet, daß**
als Gefrierkonzentrationsstufe (4, 4') im wesentlichen ein Kristallsuspensionsreaktor vorgesehen ist, der aus einem Wasserbehälter mittels einer Pumpe mit Abwasser gespeist wird und an Kühlaggregaten angeschlossen ist und der Kristallsuspensionsreaktor mit Trennsäulen zur Gewinnung des aufbereiteten Abwassers und einem weiteren Wasserbehälter zur Aufnahme des aufbereiteten Abwassers verbunden ist.

12. Anordnung nach einem der Ansprüche 4, 5 bis 11,
**dadurch gekennzeichnet, daß**
die Kühlaggregate vorzugsweise als Außenhaut-Wärmetauscher (18, 19), die die Umgebungskälte in Flughöhe des Flugzeuges nutzen, ausgebildet sind.

13. Anordnung nach einem der Ansprüche 4, 5 bis 12,
**dadurch gekennzeichnet, daß**
die Heizaggregate zur Erzeugung der Abschmelzenergie vorzugsweise als Wärmetauscher, die die Zapfluft der Triebwerke nutzen, ausgebildet sind.

14. Anordnung nach einem der Ansprüche 4, 5 bis 12,
**dadurch gekennzeichnet, daß**
die Heizaggregate zur Erzeugung der Abschmelzenergie als elektrische Heizer ausgebildet sind.

## Claims

1. Process for the treatment of waste water, in particular in aeroplanes, in which the waste water passes at least once through each of the following units in the following stated sequence: a mechanical filter stage (20; 2, 3), at least one freeze concentration stage (4, 4') by way of essential main cleaning stage, a diaphragm separating stage (6, 7, 7'), an activated-carbon filter stage (8) and a disinfecting stage (9).

2. Process according to Claim 1,
**characterised in that**
following the freeze concentration stage (4, 4') acidifying agents (5) are added to the solution.

3. Process according to Claim 1 or 2,
**characterised in that**
following the last cleaning stage minerals (11) are added.

4. Water treatment system for carrying out the process for the treatment of waste water, in particular in an aeroplane, whereby the system comprises a waste-water tank (1), a mechanical filter stage (20, 2, 3), at least one freeze concentration stage (4, 4') by way of essential main cleaning stage, a diaphragm separating stage (6, 7, 7'), an activated-carbon filter stage (8), a disinfecting stage (9) and a water tank (10), these being joined to one another in the sequence stated, and whereby a pump is provided for conveying the (waste) water.

5. System according to Claim 4,
**characterised in that**
the mechanical filter stage (20) consists substantially of at least one gauze filter (2) and/or at least one disc filter (3).

6. System according to one of Claims 4 or 5,
**characterised in that**
the diaphragm separating stage consists substantially of at least one ultra-filter (6) and/or at least one reverse-osmosis stage (7, 7').

7. System according to one of Claims 4, 5 or 6,
**characterised in that**
by way of freeze concentration stage (4, 4') a crystalline-layer reactor substantially designed as as a trickling-film reactor is provided, said reactor being linked with a water vessel (13) via a pump (14) and connected to cooling and heating units (18, 19), whereby the trickling-film reactor is supplied with waste water, the water is circulated in a closed cycle until a sufficiently thick crystalline layer has formed on a cooled wall (17) whereupon said crystalline layer is molten off and the molten-off water is collected in the same water vessel (13) or in an additional water vessel.

8. System according to Claim 7,
**characterised in that**
the trickling-film reactor is designed as a twin-walled vessel (15).

9. System according to Claim 7,
**characterised in that**
the trickling-film reactor is designed as a twin-walled vessel (15) and at the same time as a multiple-chamber vessel, whereby the crystallisation heat resulting from the growth of the crystalline layer on the cooled wall (17) is used on a further wall for melting off a further crystalline layer.

10. System according to one of Claims 4, 5 or 6,
**characterised in that**
by way of freeze concentration stage (4, 4') a crystalline-layer reactor substantially designed as a crystallisation roller is provided, whereby the roller pertaining to said reactor and cooled with the aid of cooling units is immersed into a water vessel collecting the waste water and whereby the continuously forming layer of ice crystals is scraped off with the aid of scraping devices and the scraped-off ice melted with the aid of heating units is collected in a further water vessel.

11. System according to one of Claims 4, 5 or 6,
**characterised in that**
the reactor provided by way of freeze concentration stage (4, 4') is substantially a crystal-suspension reactor, whereby waste water is pumped to said reactor from a water vessel and said reactor is connected to cooling units and whereby the crystal-suspension reactor is linked with separation columns with a view to recovering the treated waste water and with a further water vessel for receiving the treated waste water.

12. System according to one of Claims 4, 5 to 11,
**characterised in that**
the cooling units are preferably designed as skin-mounted heat exchangers (18, 19) making use of the low environmental temperature prevailing at the altitude at which the aeroplane is flying.

13. System according to one of Claims 4, 5 to 12,
**characterised in that**
the heating units producing the melting-off energy are preferably designed as heat exchangers making use of the air tapped from the engines.

14. System according to one of Claims 4, 5 to 12,
**characterised in that**
the heating units for producing the melting-off energy are designed as electric heaters.

## Revendications

1. Procédé destiné au traitement des eaux usées, plus particulièrement dans les avions, au sein duquel les eaux usées traversent au moins une fois les unités suivantes dans l'ordre donné: une unité mécanique de filtrage (20; 2, 3), au moins une unité de concentration par congélation (4, 4') effectuant une purification principale et essentielle, une unité de séparation à membrane (6, 7, 7'), une unité de filtrage au charbon actif (8) et une unité de désinfection (9).

2. Procédé selon la revendication 1, **caractérisé en ce que** des acidifiants (5) sont ajoutés à la solution après l'étape de concentration par congélation (4, 4').

3. Procédé selon l'une ou l'autre des revendications 1 à 2, **caractérisé en ce que** des minéraux (11) sont ajoutés après la dernière étape de purification.

4. Dispositif de traitement des eaux destiné à exécuter le procéde visant à traiter les eaux usées, plus particulièrement dans un avion, ledit dispositif comportant un réservoir pour eaux usées (1), une unité mécanique de filtrage (20, 2, 3), au moins une unité de concentration par congélation (4, 4') effectuant une purification principale et essentielle, une unité de séparation à membrane (6, 7, 7'), une unité de filtrage au charbon actif (8), une unité de désinfection (9) et un réservoir à eau (10), qui sont connectés l'un à l'autre dans l'ordre donné ci-dessus de même qu'est prévue une pompe destinée au transport des eaux usées.

5. Dispositif selon la revendication 4, **caractérisé en ce que** l'unité mécanique de filtrage (20) se compose principalement au moins d'un filtre-tamis (2) et/ou au moins d'un filtre à disques (3).

6. Dispositif selon l'une ou l'autre des revendications 4 à 5, **caractérisé en ce que** l'unité de séparation à membrane se compose principalement au moins d'un ultrafiltre (6) et/ou au moins d'une unité à endosmose (7, 7').

7. Dispositif selon l'une ou l'autre des revendications 4, 5 ou 6, **caractérisé en ce que**, comme unité de concentration par congélation (4, 4'), est prévu principalement un réacteur à revêtement de cristal conçu tel un réacteur à ruissellement, qui est connecté à un réservoir d'eau (13) au moyen d'une pompe (14) et relié à des agrégats de refroidissement et de chauffage (18, 19), le réacteur à ruissellement étant alimenté par les eaux usées, l'eau passant par un circuit jusqu'à ce que se crée une couche de cristal suffisamment épaisse sur la paroi refroidie (17) qui est ensuite enlevée par fusion de même que l'eau fondue est récoltée dans le même réservoir à eau (13) ou dans un autre réservoir.

8. Dispositif selon la revendication 7, **caractérisé en ce que** le réacteur à ruissellement est conçu comme un réservoir à double paroi (15).

9. Dispositif selon la revendication 7, **caractérisé en ce que** le réacteur à ruissellement est conçu comme un réservoir à double paroi (15) et simultanément comme un réservoir multicellulaire, la chaleur de cristallisation se dégageant lors de l'accroissement de la couche de cristal sur la paroi refroidie (17) étant utilisée sur une autre paroi afin de fondre une autre couche de cristal.

10. Dispositif selon l'une ou l'autre des revendications 4, 5 ou 6, **caractérisé en ce que**, comme unité de concentration par congélation (4, 4'), est prévu principalement un réacteur à revêtement de cristal conçu comme un tambour de cristallisation dont le cylindre refroidi au moyen d'agrégats de refroidissement est plongé dans un réservoir à eau récoltant les eaux usées, de même que la couche glacée de cristal se formant en permanence est grattée au moyen de dispositifs de raclage, la glace raclée étant dégelée au moyen d'agrégats de chauffage et récoltée dans un autre réservoir à eau.

11. Dispositif selon l'une ou l'autre des revendications 4, 5 ou 6, **caractérisé en ce que**, comme unité de concentration par congélation (4, 4'), est prévu principalement un réacteur de suspension à cristaux qui est alimenté par les eaux usées à partir d'un réservoir à eau au moyen d'une pompe, relié à des agrégats de refroidissement, pourvu de colonnes de rectification destinées à extraire les eaux usées traitées et connecté à un autre réservoir à eau récoltant les eaux usées traitées.

12. Dispositif selon l'une ou l'autre des revendications 4, 5 à 11, **caractérisé en ce que** les agrégats de refroidissement sont préférentiellement conçus comme des échangeurs thermiques à contact externe (18, 19) qui utilisent le froid ambiant de la hauteur absolue de l'avion.

13. Dispositif selon l'une ou l'autre des revendications 4, 5 à 12, **caractérisé en ce que** les agrégats de chauffage destinés à produire l'énergie de fusion sont conçus préférentiellement comme des échangeurs thermiques qui utilisent l'air de distribution des blocs moteurs.

14. Dispositif selon l'une ou l'autre des revendications 4, 5 à 12, **caractérisé en ce que** les agrégats de chauffage destinés à produire l'énergie de fusion sont conçus comme des appareils de chauffage électriques.
